# FASCICULE DE BREVET EUROPEEN

(11) **EP 1 068 794 B1**
(45) Date de publication et mention de la délivrance du brevet: **11.02.2004**
(21) Numéro de dépôt: 00480067.8
(22) Date de dépôt: 17.07.2000
(51) Int. Cl.: A01G 9/02

(54) **Pot de fleur évolutif à entretien réduit**
Entwicklungsfähiger Blumentopf mit beschränkter Pflege
Evolutionary flower pot with limited maintenance

(30) Priorité: 16.07.1999 FR 9909250
(43) Date de publication de la demande: 17.01.2001
(73) Titulaire: Rhalem, Mohamed, 13530 Trets (FR)
(72) Inventeur: Trevisan, Serge, 83520 Roquebrune sur Argens (FR)
(74) Mandataire: Domange, Maxime

(56) Documents cités:
- EP-A- 0 878 124
- DATABASE WPI Section PQ, Week 199644 Derwent Publications Ltd., London, GB; Class P13, AN 1996-434241 XP002133845 & AU 52161 96 A (SOURIS M), 11 juillet 1996 (1996-07-11)

## Description

L'invention est relative à un pot de fleur évolutif à entretien réduit.

Pour humidifier le milieu de culture d'un pot, pour fleur ou végétaux, il est déjà connu soit de l'arroser fréquemment, soit de le relier à une réserve d'eau par au moins une mèche prélevant par capillarité l'eau de la réserve. L'humidification par arrosage impose un entretien fréquent, tandis que la technique d'humidification par mèche réduit la périodicité de l'arrosage, mais a une durée qui est limitée puisqu'elle dépend de la consommation des végétaux, donc de la température ambiante, mais aussi de la quantité d'eau contenue dans la réserve, quantité elle-même soumise à évaporation.

Un objet de l'invention est de fournir un pot réduisant les pertes d'eau par évaporation et permettant, pour une même quantité d'eau, d'augmenter la durée d'humidification de la plante entre deux opérations d'arrosage ou remplissage de la réserve.

Un autre inconvénient des végétaux en pot résulte de leur croissance qui oblige à les dépoter pour déposer leurs racines dans un milieu de culture plus important exigeant un pot plus grand. Cette opération nécessite des manipulations d'autant plus désagréables qu'elles sont salissantes.

Un autre objet de l'invention est de fournir un pot évolutif simplifiant les opérations d'empotage et de rempotage et réduisant les risques de salissure.

Enfin, dans la plupart des pots actuels, la partie supérieure du milieu de culture est visible et présente un aspect inesthétique dévalorisant parfois le végétal. De plus, une partie de ce milieu peut s'échapper hors du pot, soit à la suite d'un choc sur le pot, soit lors du déplacement du pot, en générant des salissures qu'il faut nettoyer.

Un autre objet de l'invention est de fournir un pot masquant l'aspect inesthétique du milieu de culture et ne générant aucune salissure par Ce milieu de culture.

Le pot, selon l'invention, est composé d'un pot proprement dit, avec un fond et une paroi périphérique ? et d'un couvercle, ces deux éléments étant réalisés par moulage de matière plastique.

Selon l'invention, le pot est constitué par une cuvette ayant une hauteur inférieure à ses deux autres dimensions transversales, tandis que la liaison du couvercle avec la cuvette est rendue étanche à l'humidité par emboîtement d'au moins une nervure périphérique dans une rainure périphérique et que ce couvercle comporte une ouverture centrale pour le passage de la tige d'un végétal, fleur ou arbuste, et délimite une cavité concave de valeur supérieure au volume de la cavité de la cuvette, de manière que, après avoir a) été rempli à l'état retourné par le milieu de culture réparti sur les racines du végétal, également retourné, b) fermé par la cuvette et c) ramené avec la cuvette en position normale, la face interne de ce couvercle soit espacée du milieu de culture, alors partiellement contenu par la cuvette et constitue face de condensation pour l'eau s'évaporant de ce milieu de culture et moyen de retour des condensats vers ce milieu de culture.

Ainsi, lorsqu'un végétal est disposé dans ce pot, sa tige passe à travers l'ouverture centrale du couvercle en ne laissant apparaître que sa partie aérienne, puisque la base de sa tige, le milieu de culture et les racines sont masqués au regard par le couvercle qui assure également la rétention du milieu de culture.

Par ailleurs, avec ce type de pot, l'eau s'évaporant du milieu de culture, et provenant soit d'un arrosage par l'ouverture centrale, soit d'une alimentation par réservoir, se condense pour l'essentiel sur la face interne du couvercle jusqu'à retomber en gouttelettes sur ce milieu de culture ou cheminer par ruissellement jusqu'à lui. Ainsi, les déperditions hygrométriques sont limitées à la couronne ménagée entre la tige du végétal et le bord de l'ouverture centrale, et sont donc très réduites.

Enfin, le couvercle et la cuvette forment un ensemble monolithique pouvant présenter toute forme décorative et qui, en retenant la terre, permettent de donner au pot des positions autres qu'horizontales, et voire même verticales.

Avantageusement, l'ouverture ménagée dans le couvercle est délimitée par des anneaux de diamètres de plus en plus grands reliés les uns aux autres par des voiles de matière sécable.

Cet agencement permet d'adapter la dimension de l'ouverture centrale aux besoins, c'est-à-dire à la dimension de la partie aérienne du végétal si le végétal est introduit par cette partie, ou à la dimension de ses racines, s'il est introduit de façon inverse à travers l'ouverture du couvercle.

Dans une forme d'exécution, le pot comprend également une rallonge tubulaire s'insérant entre la cuvette et le couvercle et comportant, sur ses bords, respectivement, supérieur et inférieur, des moyens complémentaires de ceux portés, respectivement, par le couvercle de la cuvette, de type rainure et nervure, aptes à former une barrière étanche à l'humidité.

Cette rallonge tubulaire, pouvant être utilisée seule ou en combinaison avec une ou plusieurs autres rallonges, permet d'augmenter la quantité de milieu de culture, sans avoir à dépoter le végétal et par une procédure simple qui sera précisé plus loin.

Dans une forme d'exécution, la cuvette est ceinturée par une collerette par laquelle elle peut reposer sur le bord périphérique d'un socle creux contenant des glissières pour au moins un tiroir, et ladite cuvette comporte au-dessus de chaque tiroir des ouvertures pour le passage d'une mèche formant une boucle et dont l'un des brins est dans la cuvette, tandis que l'autre brin est sous la cuvette et au contact du contenu du tiroir.

Ainsi, quand la cuvette est disposée sur le socle, la ou les mèches dont elle est solidaire viennent en contact avec le contenu des tiroirs sous jacents et assurent donc le cheminement de ce contenu dans le milieu de culture. Lorsque tout le contenu d'un tiroir a été transféré dans le milieu de culture, le tiroir est réalimenté.

D'autres caractéristiques et avantages ressortiront de la description qui suit en référence au dessin schématique annexé représentant, à titre d'exemples, plusieurs formes d'exécution du pot selon l'invention.
Figures 1 et 2 sont des vues en coupe longitudinale d'une forme d'exécution, respectivement, du couvercle et de la cuvette,
Figures 3 et 4 sont des vues en coupe longitudinale montrant deux autres formes d'exécution de cette cuvette,
Figures 5 et 6 sont des vues en coupe transversale, respectivement, de la rallonge et du socle,
Figure 7 est une vue en coupe transversale montrant une configuration du pot obtenue par empilage d'un socle d'une cuvette et d'un couvercle,
Figure 8 est une vue en coupe longitudinale d'une autre configuration du pot obtenue par empilage d'un socle, d'une couvercle, d'une rallonge et d'un couvercle,
Figures 9 et 10 sont des vues schématiques de côté en coupe illustrant les deux phases de l'empotage d'un végétal,
Figures 11 et 12 sont des vues schématiques de côté illustrant deux phases du rempotage d'un végétal,
Figure 13 est une vue de côté en élévation montrant l'utilisation verticale du pot selon l'invention.

Dans ce dessin, la référence numérique 2 désigne, de manière générale, le pot en forme de cuvette, 3 le couvercle, 4 une rallonge, et 5 un socle creux. Tous ces éléments sont obtenus par moulage de matière plastique et présentent donc des parois imperméables à l'eau et à l'humidité.

Quelle que soit sa forme d'exécution particulière, la cuvette 2 a une hauteur H qui est inférieure à ses dimensions transversales, à savoir à son diamètre transversal si sa section transversale est circulaire, et à sa longueur et largeur, si sa section transversale est rectangulaire. Cette cuvette est composée d'un fond 2a et d'une paroi périphérique 2b allant en s'évasant vers le haut et dont le bord supérieur est muni d'une collerette périphérique 2c. De la face supérieure de cette collerette débouche une rainure 6.

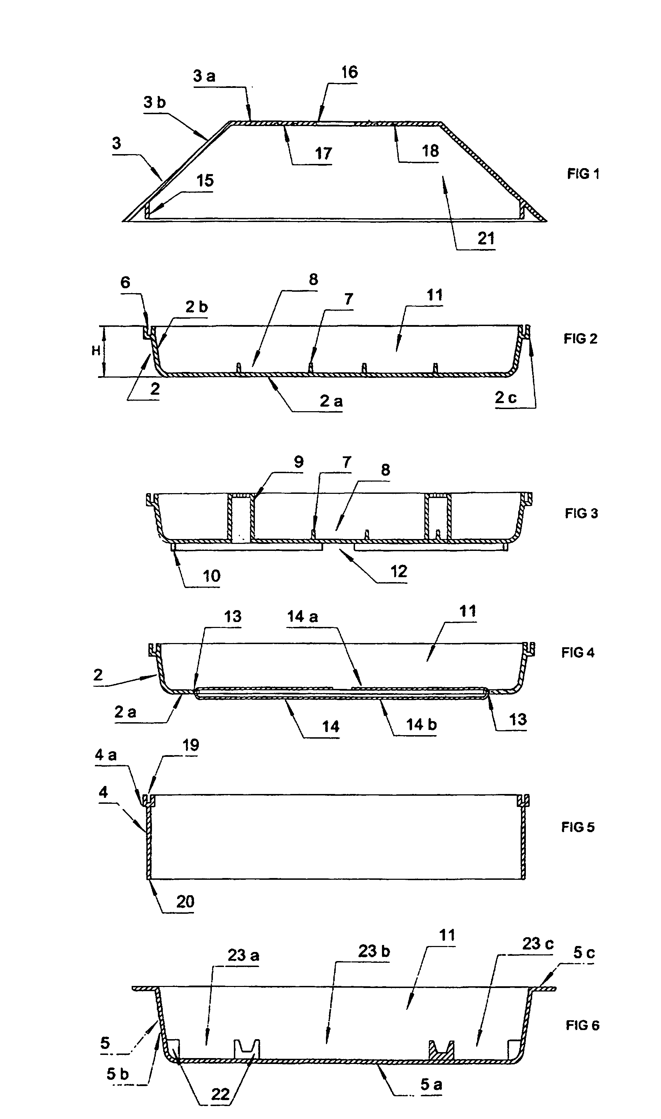

Dans la forme d'exécution représentée à la figure 2, des nervures 7 s'entrecroisant délimitent des réserves 8 pouvant accumuler l'eau d'arrosage.

La forme d'exécution représentée à la figure 3 comporte en plus et en saillie vers le haut à partir du fond 2a, des cheminées 9 permettant la mise en communication du milieu de culture avec l'air ambiant. Dans ce cas, le fond comporte également, en saillie vers le bas, une nervure inférieure 10 comportant des ajours 12 permettant la circulation de l'air, lorsque la cuvette 2 est posée sur une surface horizontale.

Dans la forme d'exécution représentée aux figures 4, 7 et 8, la cuvette 2 comporte, dans son fond 2a, des ouvertures 13 pour le passage d'au moins une mèche 14 formant une boucle et comportant un brin discontinu 14a, s'étendant le long du fond dans la cavité 11 délimitée par la cuvette, et un brin 14b s'étendant sous ce fond.

Le couvercle 3 présentant en section transversale la même forme que celle de la cuvette, est composé d'une paroi supérieure 3a et d'une paroi périphérique pentue 3b. En saillie de sa face inférieure, la paroi 3b possède une nervure périphérique 15 apte à s'emboîter dans la rainure 6 de la cuvette. La paroi 3a du couvercle est traversée par une ouverture centrale 16 qui, dans la forme d'exécution représentée à la figure 1, est délimitée par plusieurs anneaux 17, de diamètres de plus en plus grand, et reliés les uns aux autres par des voiles de matière 18, chacun de ces voiles étant sécable pour permettre d'adapter la dimension de l'ouverture centrale 16 aux besoins.

Les parois 3a et 3b du couvercle 3 forment une cavité 21 dont le volume V est supérieur au volume v de la cavité 11 formée par la cuvette 2.

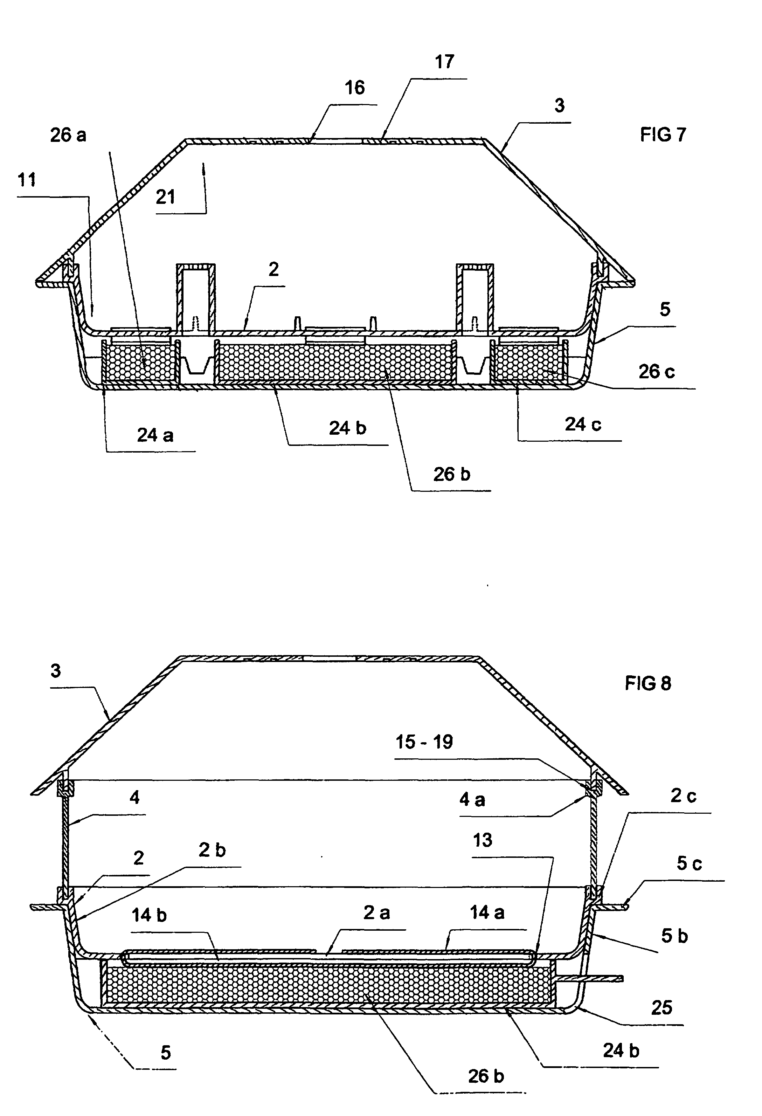

La rallonge 4, montrée à la figure 5, est de forme tubulaire, et présente une section transversale identique à celle du couvercle et de la cuvette, c'est-à-dire ronde ou rectangulaire. Sur son bord supérieur, la rallonge 4 comporte un épaississement 4a dans lequel est ménagée une rainure 19, identique à celle 6 de la cuvette. Quant à son bord inférieur, il est agencé pour former une nervure 20, identique à celle 15, du couvercle, c'est-à-dire apte à s'engager soit dans la rainure 6 de la cuvette, soit dans la rainure 19 d'une autre rallonge.

Le socle 5 est creux, c'est-à-dire est composé d'un fond 5a et d'une paroi périphérique 5b allant en s'évasant vers le haut et suivant sensiblement le même angle que le bord périphérique 2b de la cuvette 2. Ce bord 5b est muni, à son extrémité supérieure, d'un collet extérieur 5c pouvant servir d'appui à la collerette 2c d'une cuvette 2.

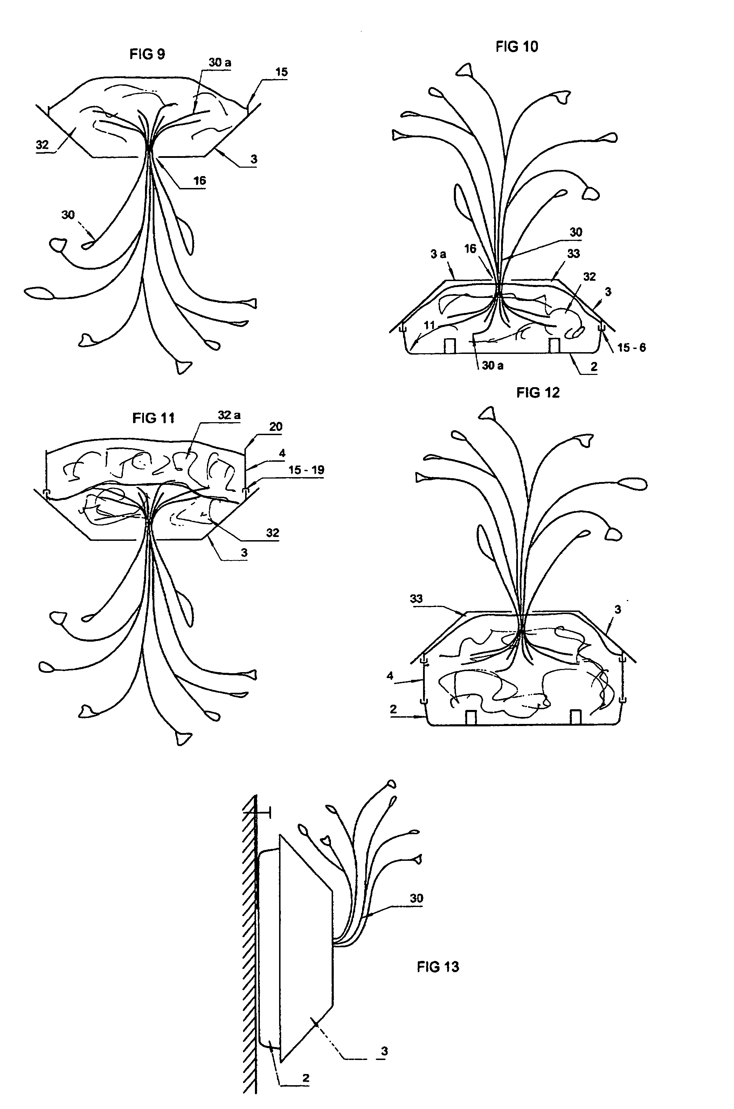

En saillie de son fond, il comporte des glissières 22 qui, dans la forme d'exécution représentée, délimitent trois logements 23a, 23b et 23c pour trois tiroirs 24a, 24b et 24c, montrés à la figure 7. Chacun de ces tiroirs peut être extrait à travers une ouverture 25 de la paroi 5b, visible à la figure 8, et contient un tampon absorbant 26a, 26b et 26c, d'une hauteur suffisante pour venir en contact avec le brin 14b de la mèche correspondante disposée au-dessus de lui.

Dans une version simplifiée, et comme montré à la figure 10, le pot selon l'invention est composé uniquement de la cuvette 2, selon l'une des formes d'exécution représentées aux figures 2 et 3, et du couvercle 3.

Pour empoter un végétal 30 dans ce pot, il faut d'abord, comme montré à la figure 9, retourner de 180° le couvercle 3 et engager le végétal 30 à travers l'ouverture 16, de manière que ses racines 30a viennent dans la cavité de ce couvercle. Cet engagement s'effectue par la partie de plus petite dimension du végétal, à savoir soit par ses racines, soit par sa partie aérienne, si c'est celle-ci qui est moins encombrante. Lorsque les racines 30a sont positionnées sensiblement à mi hauteur du couvercle 3, le milieu de culture 32 est déversé et réparti dans la cavité 11. Le remplissage s'effectue de manière à dépasser légèrement la nervure 15 pour tenir compte du tassement ultérieur de ce milieu.

Lorsque le milieu a été correctement réparti dans le couvercle 3, la cuvette 2 est à son tour retournée, de manière que sa rainure 6 s'emboîte sur la nervure de ce couvercle 15. Lorsque cette opération a été effectuée, l'ensemble du pot est retourné et vient dans la configuration représentée à la figure 10. Sous l'effet de ce retournement, le milieu de culture 32 contenu jusqu'alors dans le couvercle 3 se répartit au moins partiellement dans la cavité 11 de la cuvette 2 en formant ainsi, entre lui et la face interne du couvercle 3, un espace 33. En raison de cet espace et grâce à la liaison étanche entre le couvercle 3 et la cuvette 2, assurée par emboîtement de la nervure 15 dans la rainure 6, mais aussi grâce à l'imperméabilité des parois composant les éléments du pot, l'eau qui s'évapore à l'intérieur de ce pot, à partir du milieu de culture 32, va, pour sa plus grande partie, se condenser contre la face interne du couvercle 3. De là, les condensats, soit retombent en gouttes dans le milieu naturel, soit ruisselle le long de la paroi périphérique pentue pour revenir dans ce milieu naturel.

Avec ce type de pot, l'apport en eau est effectué par arrosage à travers l'ouverture 16 ou à travers une ouverture supplémentaire ménagée dans la paroi 3a du couvercle et équipée d'un bouchon.

Les figures 11 et 12 montrent que, lorsque le végétal 30 s'est développé et plutôt que de procéder à son dépotage et rempotage dans un pot plus grand, il suffit, après avoir retourné le pot d'origine et retiré la cuvette 2, de venir emboîter une rallonge 4 en prenant soin d'engager sa rainure 19 sur la nervure 15 du couvercle 3. A ce stade, un apport de milieu de culture complémentaire 32a est introduit dans la cavité formée par la rallonge 4, puis la cuvette 2 est mise en place en emboîtant sa rainure 6 sur la nervure 20 de la rallonge, et il est procédé au retournement du pot. Lors de ce retournement, et comme montré à la figure 12, l'apport supplémentaire du milieu de culture provoque un tassement qui ménage, entre ce milieu de culture et le couvercle 3, un nouvel espace 33 permettant la récupération de l'eau d'évaporation et la formation de condensats qui retournent dans le milieu de culture.

Cette opération d'accroissement du volume du milieu de culture s'effectue très aisément, et sans qu'il y ait besoin de procéder à de nombreuses manipulations, et voire même de se salir.

Dans une forme d'exécution plus élaborée, montrée aux figures 7 et 8, la cuvette 2 de la forme d'exécution représentée à la figure 4 est superposée à un socle 5 de manière à bénéficier, par ses mèches 14, d'une alimentation permanente. Les tampons absorbants 26a, 26c peuvent chacun être imprégnés d'eau, mais ils peuvent aussi être imprégnés de produits liquides différentes, et par exemple celui 26a d'agent nutritif liquide, celui 26b d'eau, et celui 26c d'un agent antibactérien liquide. Ces tampons absorbants peuvent être imprégnés régulièrement ou plus simplement être jetables et remplacés par une cassette comprenant le tiroir correspondant avec son tampon absorbant.

Quels que soient les produits diffusés au milieu de culture par les trois mèches, superposées à chacun des tiroirs, le temps d'humidification assuré par ces moyens est fortement prolongé par la récupération de l'évaporation et des condensats à l'intérieur du pot, ce qui réduit considérablement le besoin d'entretien d'un végétal disposé dans un tel pot.

La figure 8 montre que le recours au socle 5 n'empêche pas d'utiliser une rallonge 4 et de faire évoluer le pot avec la croissance du végétal qu'il contient.

En complément des avantages précédemment décrits, il faut préciser que le couvercle 3 forme également une serre qui, en accroissant la température à l'intérieur du pot, facilite le développement radiculaire du végétal. Cet effet de serre peut être augmenté en donnant au couvercle 3 une couleur foncée.

En outre, la réduction de la hauteur de la cuvette limite les masses du milieu de culture et en conséquence le poids général du pot, qui peut ainsi être déplacé plus aisément.

Cette forme en cuvette impose également un développement radiculaire à l'horizontale, ce qui permet, pour des besoins de décoration, de disposer le pot verticalement, comme montré à la figure 13. Dans ce cas, le végétal se développe vers le haut ou vers le bas, en fonction de sa nature.

Le pot, selon l'invention, est très esthétique puisque le milieu de culture est masqué sous le couvercle et que seule la partie aérienne du végétal sort de ce pot. De plus, le couvercle et les moyens de jonction entre ce couvercle et la cuvette qui assurent une étanchéité à l'eau, empêchent toute projection d'eau ou du milieu de culture sur la surface portant le pot, ce qui permet de disposer ce pot sur des meubles de valeur, sans aucun risque de détérioration.

Grâce au peu d'entretien que nécessitent les végétaux disposés dans de tels pots, ces végétaux redeviennent un élément d'ornement et non une source de contrainte d'entretien.

Dans une variante non représentée, la cuvette 2 est solidaire d'un hygromètre détectant le taux d'humidité dans le milieu de culture et dont le cadran est disposé dans une ouverture de la paroi de cette cuvette, de manière à être lu de l'extérieur. Cet hygromètre est une garantie d'humidification du milieu de culture en évitant que le trop grand espacement entre deux opérations de réhumidification par arrosage ou par nouvelle imprégnation des tampons absorbants, soit la cause d'une absence d'entretien.

Dans une autre variante non représentée, les nervures et rainures respectivement 15 et 6 entre le couvercle et la cuvette, mais aussi une nervure 20, une rainure 19, les rallonges 4, sont munies de moyens d'encliquetage réciproque garantissant le verrouillage de leur liaison. Ces moyens d'encliquetage peuvent être des moyens à coincement. Enfin, les nervures 15 et 20 et rainures 6 et 19 peuvent être inversées réciproquement, sans que cela change la liaison étanche entre les divers éléments.

## Revendications

1. Pot de fleur évolutif et à entretien réduit, composé d'un pot (2) avec un fond (2a) et une paroi périphérique (2b) et d'un couvercle (3), ces deux éléments (2, 3) étant réalisés par moulage de matière plastique, **caractérisé en ce que** ce pot est constitué par une cuvette (2) ayant une hauteur inférieure à ses deux autres dimensions transversales, tandis que la liaison du couvercle (3) avec la cuvette (2) est rendue étanche à l'humidité par emboîtement d'au moins une nervure périphérique (15) dans une rainure périphérique (6) et que ce couvercle (3) comporte une ouverture centrale (16) pour le passage de la tige d'un végétal, fleur ou arbuste, et délimite une cavité concave (41) de valeur supérieure au volume de la cavité (11) de la cuvette (2), de manière que, après a) retournement du couvercle (3), b) remplissage de celui-ci par le milieu de culture (32) réparti sur les racines du végétal, également retourné, c) fermeture du couvercle (3) par la cuvette (2) retournée et d) retournement de 180° de l'ensemble cuvette-couvercle-végétal, la face interne du couvercle (3) soit espacée du milieu de culture (32), alors partiellement contenu dans la cuvette (2), et constitue face de condensation pour l'eau s'évaporant de ce milieu de culture et moyen de retour des condensats vers ce milieu de culture.

2. Pot selon la revendication 1, **caractérisé en ce que** la cuvette (2) comporte, en saillie de son fond, des nervures (7), entrecroisées et délimitant des réserves pour l'eau d'arrosage ou de pluie.

3. Pot selon la revendication 1, **caractérisé en ce que** la cuvette (2) comporte, en saillie de son fond, des cheminées débouchantes (9) mettant en communication le milieu de culture avec l'air ambiant.

4. Pot selon la revendication 1, **caractérisé en ce que** l'ouverture (16) ménagée dans le couvercle est délimitée par des anneaux (17) de diamètres de plus en plus grands reliés les uns aux autres par des voiles (18) de matière sécable.

5. Pot selon la revendication 1, **caractérisé en ce qu'**il comprend également une rallonge tubulaire (4) s'insérant entre la cuvette (2) et le couvercle (3) et comportant, sur ses bords, respectivement, supérieur et inférieur, des moyens de positionnement et d'étanchéité complémentaires de ceux portés, respectivement, par le couvercle (3) de la cuvette (2), de type rainure (19) et nervure (20), aptes à former une barrière étanche à l'humidité.

6. Pot selon la revendication 1, **caractérisé en ce que** la cuvette (2) est ceinturée par une collerette (2c) par laquelle elle peut reposer sur le bord périphérique (5c) d'un socle creux (5) contenant des glissières (23a, 23b, 23c) pour au moins un tiroir (24a, 24b, 24c), et ladite cuvette (2) comporte, au-dessus de chaque tiroir des ouvertures (13) pour le passage d'une mèche (14) formant une boucle et dont l'un des brins (14a) est dans la cuvette, tandis que l'autre brin (14b) est sous la cuvette et au contact du contenu du tiroir correspondant.

7. Pot selon l'ensemble des revendications 1 et 6, **caractérisé en ce que** la cuvette (2) porte trois mèches (14) parallèles et espacées aptes chacune à coopérer avec le contenu d'un tiroir (24a, 24b,24c) sous jacent disposé dans le socle (5), à savoir un tampon absorbant (26b) imprégné d'eau, un tampon absorbant (26a) imprégné d'éléments nutritifs et un tampon absorbant (26c) imprégné d'un agent antibactérien.

8. Pot selon la revendication 7, **caractérisé en ce que** la cuvette (2) est solidaire d'un hygromètre détectant le taux d'humidité dans le milieu de culture et dont le cadran de lecture est disposé dans une ouverture de la paroi de cette cuvette pour être lisible de l'extérieur.

9. Pot selon la revendication 1, **caractérisé en ce que** les nervures périphériques et rainures périphériques s'emboîtant entre le couvercle et la cuvette et entre ses deux éléments et la rallonge, sont munies de moyens d'encliquetage réciproque.

## Claims

1. An adaptable flowerpot with reduced maintenance, comprising a cover (3) and a pot (2) having a bottom (2a) and a peripheral wall (2b), these two elements (3, 2) being made by molding a plastics material, the flowerpot being **characterized in that** it is constituted by a bowl (2) of height smaller than its other two dimensions that extend transversely, with the connection between the cover (3) and the bowl (2) being made moisture-tight by at least one peripheral rib (15) engaging in a peripheral groove (6) and with the cover (3) having a central opening (16) for passing the stem of a plant, a flower or a bush, and defines a concave cavity (41) of volume greater than the volume of the cavity (11) of the bowl (2), such that after a) the cover (3) has been turned upside-down, b) filled with a growth medium (32) distributed over the roots of the plant, likewise upside-down, c) the cover (3) has been closed by the upside-down bowl (2), and d) the assembly comprising the bowl, the cover, and the plant has been turned through 180°, the inside face of the cover (3) is spaced apart from the growth medium (32) which is then contained in part in the bowl (2) and thus constitutes a condensation face for water evaporating from said growth medium and means for returning condensate to said growth medium.

2. A flowerpot according to claim 1, **characterized in that** the bowl (2) has ribs (7) projecting from its bottom that cross one another and define reserves for water.

3. A flowerpot according to claim 1, **characterized in that** the bowl (2) includes open chimneys (9) projecting from its bottom and putting the growth medium into communication with ambient air.

4. A flowerpot according to claim 1, **characterized in that** the opening (16) provided in the cover is defined by rings (17) of ever-increasing diameter connected to one another by webs of breakable material.

5. A flowerpot according to claim 1, **characterized in that** it further comprises a tubular extender (4) suitable for insertion between the bowl (2) and the cover (3) and having on its top and bottom edges respectively positioning and sealing means complementary to those carried respectively by the cover (3) and the bowl (2), of the groove (19) and rib (20) type, suitable for forming a moisture-tight barrier.

6. A flowerpot acorn to claim 1, **characterized in that** the bowl (2) is surrounded by a rim (2c) enabling it to rest against the peripheral edge (5c) of a hollow stand (5) containing slideways (23a, 23b, 23c) for at least one drawer (24a, 24b, 24c), and said bowl (2) includes, above each drawer, openings (13) for passing a wick (14) forming a loop having one of its strands (14a) in the bowl and its other strand (14b) beneath the bowl in contact with the content of the corresponding drawer.

7. A flowerpot according to claims 1 and 6 taken together, **characterized in that** the bowl (2) carries three parallel wicks (14) that are spaced apart, each suitable for co-operating with the content of an underlying drawer (24a, 24b, 24c) disposed in the stand (5), namely an absorbent pad (26a) impregnated with water, an absorbent pad (26b) impregnated with nutrient elements, and an absorbent pad (26c) impregnated with an antibacterial agent.

8. A flowerpot according to claim 7, **characterized in that** the bowl (2) is secured to a hygrometer detecting the humidity in the growth medium and having a read-out dial disposed in an opening of the wall of said bowl so as to be readable from the outside.

9. A flowerpot according to claim 1, **characterized in that** the peripheral ribs and the peripheral grooves that inter-engage between the cover and the bowl and between those two elements and the extender are provided with mutual snap-fastening means.

## Patentansprüche

1. Erweiterbarer und wartungsarmer. Blumentopf, bestehend aus einem Topf (2) mit einem Boden (2a) und einer Umfangswand (2b) und aus einem Deckel (3), wobei diese beiden Elemente (2, 3) durch Guss aus Plastikmaterial hergestellt sind, **dadurch gekennzeichnet, dass** dieser Topf von einer Schale (2) gebildet wird, die eine geringere Höhe als ihre beiden anderen transversalen Dimensionen hat, wobei die Verbindung des Deckels (3) mit der Schale (2) durch Einführung mindestens einer Umfangsrippe (15) in eine Umfangsrille (6) feuchtigkeitsdicht gemacht wird und dass dieser Deckel (3) eine zentrale Öffnung (16) für den Durchgang eines Stiels einer Pflanze, einer Blume oder eines Strauchs trägt und einen konkaven Hohlraum (41) mit einem größeren Volumen als der Hohlraum (11) der Schale (2) begrenzt, derart, dass nach a) Umdrehen des Deckels (3), b) Füllen desselben durch das auf die Wurzeln der ebenfalls umgedrehten Pflanze verteilte Kulturmedium (32), c) Schließen des Deckels (3) durch die umgedrehte Schale (2) und d) Umdrehen um 180° der Gesamtheit von Schale-Deckel-Pflanze die Innenseite des Deckels (3) vom Kulturmedium (32), das teilweise in der Schale (2) enthalten ist, beabstandet ist und eine Kondensationsfläche für das aus dem Kulturmedium verdampfende Wasser und ein Mittel für die Rückkehr des Kondensats in dieses Kulturmedium bildet.

2. Topf gemäß Anspruch 1, dadurch ausgezeichnet, dass die Schale (2) von ihrem Boden abstehend Rippen (7) trägt, die sich überschneiden und Reserven für das Gieß- oder Regenwasser begrenzen.

3. Topf gemäß Anspruch 1, dadurch ausgezeichnet, dass die Schale (2) von ihrem Boden abstehend geöffnete Rohre (9) trägt, die das Kulturmedium mit der Umgebungsluft in Verbindung setzen.

4. Topf gemäß Anspruch 1, **dadurch gekennzeichnet, dass** die im Deckel vorgesehene Öffnung (16) durch Ringe (17) von immer größeren Durchmessern begrenzt ist, die miteinander durch Tücher (18) aus trockenbarem Material verbunden sind.

5. Topf gemäß Anspruch 1, **dadurch gekennzeichnet, dass** er auch ein röhrenförmiges Verlängerungsstück (4) aufweist, die sich zwischen die Schale (2) und den Deckel (3) einschiebt und an ihren Rändern, beziehungsweise oben und unten, Positionierungs- und Dichtigkeitsmittel passend zu jenen, die jeweils vom Deckel (3) und der Schale (2) getragen werden, vom Typ Rippe (19) und Rille (20) aufweist, die eine feuchtigkeitsdichte Barriere bilden können.

6. Topf gemäß Anspruch 1, **dadurch gekennzeichnet, dass** die Schale (2) von einem Kragen (2c) umklammert wird, mit welchem sie auf dem Umfangsrand (5c) eines hohlen Sockels (5) ruhen kann, der Gleitschienen (23a, 23b, 23c) für mindestens eine Schublade (24a, 24b, 24c) enthalten kann, und die genannte Schale (2) oberhalb jeder Schublade Öffnungen (13) für den Durchgang eines Dochts (14) aufweist, der eine Schleife bildet und von welchem einer der Fäden (14a) in der Schale ist, während der andere Faden (14b) unter der Schale und im Kontakt mit dem Inhalt der entsprechenden Schublade ist.

7. Topf gemäß der Gesamtheit der Ansprüche 1 und 6, **dadurch gekennzeichnet, dass** die Schale (2) drei parallele und voneinander beabstandete Dochte (14) aufweist, die alle in der Lage sind, mit dem Inhalt einer darunter liegenden im Sockel (5) angeordneten Schublade (24a, 24b, 24c) zusammenzuwirken, nämlich einem absorbierenden mit Wasser imprägnierten Bausch (26b), einem absorbierenden mit Nährstoffelementen imprägnierten Bausch (26b) und einem absorbierenden mit einem antibakteriellen Mittel imprägnierten Bausch (26c).

8. Topf gemäß Anspruch 7, **dadurch gekennzeichnet, dass** die Schale (2) mit einem Hygrometer fest verbunden ist, das den Feuchtigkeitsgrad im Kulturmedium misst und dessen Skalenscheibe in einer Öffnung der Wand dieser Schale angeordnet ist, um von außen lesbar zu sein.

9. Topf gemäß Anspruch 1, **dadurch gekennzeichnet, dass** die Umfangsrippen und die Umfangsrillen, die zwischen den Deckel und die Schale und zwischen seine beiden Elementen und den Auszug ineinander passen, mit Mitteln zur gegenseitigen Verklinkung ausgestattet sind.
